# EUROPEAN PATENT APPLICATION

(11) **EP 0 575 000 A1**
(43) Date of publication of application: **22.12.1993**
(21) Application number: 93201700.7
(22) Date of filing: 14.06.1993
(51) Int. Cl.: H04L 25/38

(54) **Arrangement for estimating data from a noisy digital data signal and receiver comprising such an arrangement**

(30) Priority: 19.06.1992 EP 92201791
(71) Applicant: Philips Electronics N.V., 5621 BA Eindhoven (NL)
(72) Inventor: Mohindra, Rishi, NL-5656 AA Eindhoven (NL)
(74) Representative: De Jongh, Cornelis Dominicus

(57) **Abstract**

A known noise filter (1), e.g. for a paging receiver (30), comprises a shift register (3) with a number of stages (st1, st2, st3, st4, st5, st6) and a combinational majority logic circuit coupled to all stages of the shift register. The majority logic circuit becomes large and complex with an increasing number of shift register stages and furthermore the propagation delay between transitions in the data and the majority logic circuit becomes considerable.

According to the present invention an improved and less complicated arrangement (1) for estimating data from a noisy data signal is disclosed. The arangement (1) comprises a state machine as a majority logic arrangement (7) having up-count and down-count inputs (8, 9) coupled with only the first and last stages (st1, st6) of the shift register (3). The internal states of the state machine represent the number of "1"s in the shift register (3). The state machine (7) monitors the data samples entering and leaving the shift register (3), and a transition to a "higher" "1"s state occcurs on an up-count, i.e. when a "1" enters the shift register (3) and a "0" leaves the shift register (3). A transition to a "lower" "1"s state occurs on a down-count, i.e. when a "0" enters the shift register (3) and a "1" leaves the shift register (3). The states are decoded by a combinational circuit (23), states (s1, s2, s3, s4, s5) representing a minority of "1"s, being decoded as a logic "0", and states (s6, s7, s8, s9, s10) representing a majority of "1"s, being decoded as a logic "1".

## Description

The present invention relates to an arrangement for estimating data from a noisy digital data signal, comprising a shift register having a plurality of n stages, n being an integer, the shift register having an input and a clock input, means for clocking the clock input at a frequency greater or equal than n times the data rate of the noisy signal, and a majority logic arrangement coupled to the shift register, the majority logic arrangement having an output for outputting a digital output signal on the basis of a majority decision about digital data in the n stages.

The present invention further relates to a receiver comprising such an arrangement.

In systems involving transmission of data, it is important to try to avoid the effects of data becoming such distorted that falsing of the data occurs. E.g., in a paging system if address data become distorted in transmission, then it is possible that the true addressee of the paging call is not alerted because the address information has become corrupted. In case of noisy data pre-filtering improves the data in that the data become less distorted.

An arrangement of this kind is known from US Patent No. 4,686,676. The known arrangement comprises a shift register for inputting noisy data at a rate higher than the data rate, e.g. noisy data is clocked into a six stage shift register at eight times the data rate, i.e. 8 data samples are taken per data bit duration. All outputs of the shift register are coupled to a majority logic arrangement. At the output of the known arrangement the data are filtered on the basis of a majority decision about 6 samples. In case of an even number of shift register stages the majority logic arrangement comprises a further input which is coupled to an output of the arrangement for estimating data, for supplying the last decision to the majority logic arrangement and for allowing a majority decision always to be taken, i.e. also for the same number of "1"s and "0"s in the shift register.

A known majority logic arrangement is shown in figure 4 of US 4,686,676. With an increasing number of shift register stages the known majority logic arrangement becomes a large and complex combinational logic circuit. E.g. with 16 samples per data bit and 12 shift register stages the known majority logic arrangement becomes impracticable. Also the propagation delay between the transitions in the data and the majority logic decision becomes considerable.

It is an object of this invention to provide an improved and less complicated arrangement.

An arrangement for estimating data from a noisy digital data signal according to the present invention is characterised in that the majority logic arrangement is a state machine having a first and a second input coupled to the input of a first and an output of a last shift register stage, and having internal states representing increasing numbers of data bits in the shift register of a first logic value, a transition from an internal state to a state representing an increased number of data bits occurring on entry of an input datum into the shift register of the first logic value and on leave of a datum of a second logic value out of the last stage, and a transition from an internal state to a state representing a decreased number of data bits occurring on entry of an input datum into the shift register of the second logic value and on leave of a datum of the first logic value out of the last stage. The arrangement of the present invention is particularly advantageous in combination with a large shift register containing a lot of samples. E.g. for twelve samples the state machine has got 16 internal states which can be represented by only four flipflops. Furthermore, a relatively simple combinational logic circuit is needed for decoding the present states along with the signals derived from the shift register to supply control signals to the flipflops, and a further combinational logic circuit is required for decoding the states in order to get filtered output data.

The invention is based upon the insight that, once the initial state of the shift register and the state machine are known, it will only be necessary to monitor the data sample entering the shift register and the data sample leaving the shift register, i.e. if a data sample of a same logic value enters and leaves the shift register the internal state of the state machine remains the same, whereas a state transition occurs if data of different logic values enter and leave the register respectively.

An embodiment of an arrangement according to the present invention is characterised in that the state machine comprises an up-count input for controlling the transition to the increased state, and a down-count input for controlling the transition to the decreased state, the up-count input being gated by a logic-and of the shift register input and the inverse of the output of the last shift register stage, and the down-count input being gated by a logic-and of the inverse of the shift register input and the output of the last shift register stage. The monitoring of the samples entering and leaving the shift register and the internal operation of the state machine can thus simply be interpreted as a counting mechanism, counting-up states if a logic "1" enters the register and a logic "0" leaves the register, and counting-down if a logic "0" enters the register and a logic "1" leaves the register. The internal state represents the number of logic "1"s in the register.

A further embodiment of an arrangement according to the present invention is characterised in that the number of stages n is even, and in that the state machine comprises two internal states representing the same number of data bits in the shift register of the first and the second digital value, and two adjacent internal states for allowing to maintain a correct transition from a previous majority decision. It is thus ensured via a split-up of a state representing the same number of logic "1"s and "0"s that the state machine distinguishes between a situation counting down from a majority of "1"s and a situation counting up from a minority of "1"s, i.e. a preceding decision is taken into account in a current decision also in case the number of "1"s is equal to the number of "0"s in the register, resulting in a better overall decision or filtering.

A further embodiment of an arrangement according to the present invention is characterised in that the shift register is loaded with a predetermined bit pattern at power-on of the arrangement and that an internal state is set accordingly. It is ensured, after power-on, that the state machine always starts from a state corresponding to the number of data bits of the first logic value in the shift register. The load pattern in the shift register could be all "0"s.

A further embodiment of an arrangement according to the present invention is characterised in that the arrangement further comprises an input latch coupled to the input of the shift register for inputting the noisy data. By adding the input latch it is ensured that stable data enter into the shift register, i.e. that the input data are stable during clock transitions.

The present invention will now be described, by way of example, with reference to the accompanying drawings, wherein
Fig. 1 shows an arrangement for estimating data from a noisy digital data signal according to the present invention,
Fig. 2 shows a state diagram for the operation of a majority logic arrangement in an arrangement for estimating data according to the present invention, and
Fig. 3 shows a paging receiver comprising an arrangement for estimating data according to the present invention.

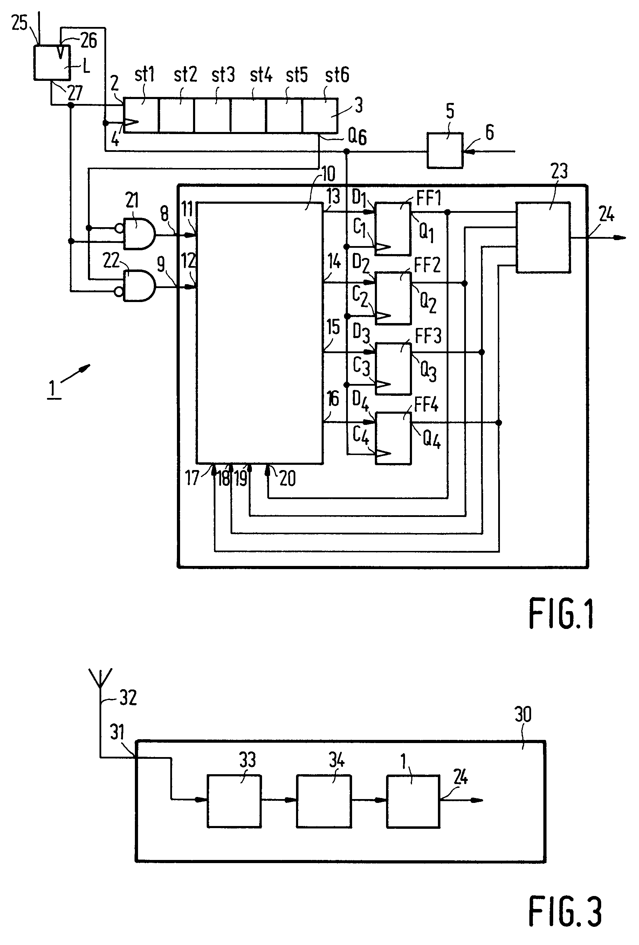

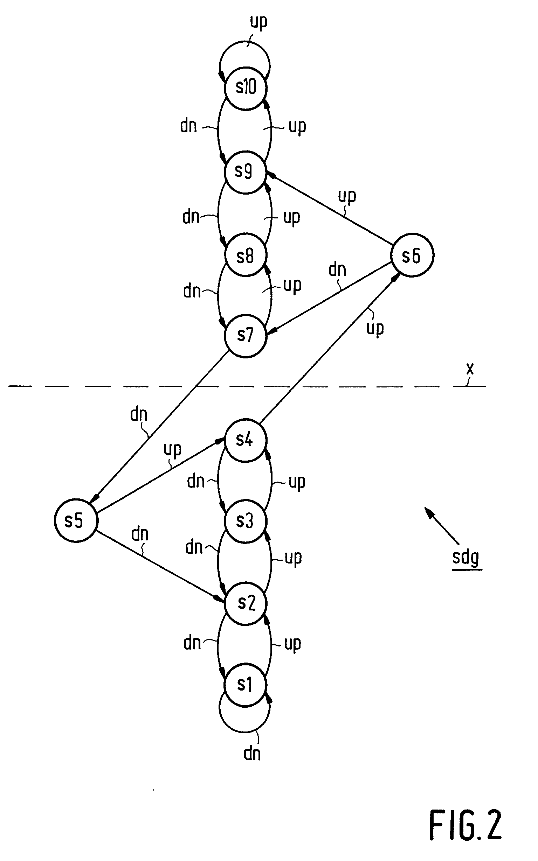

Figure 1 shows an arrangement 1 according to the present invention for estimating data from a noisy digital data signal. The arrangement 1 comprises a shift register 3, having six stages st1 through st6, with an input 2 and a clock input 4. The arrangement 1 further comprises means 5 for clocking the clock input at a frequency greater or equal than n times (in the given example n=6) the data rate of the noisy signal. The clocking means 5 have a control input 6 to which a control signal can be feeded for adjusting the clock frequency. A majority logic arrangement 7, being a state machine, is coupled with a first input 8 and with a second input 9 to the first shift register stage st1, to the input 2 thereof, and to the last shift register stage st6. The majority logic arrangement 7 comprises four flipflops, FF1, FF2, FF3 and FF4, at outputs Q₁, Q₂, Q₃ and Q₄ thereof an internal state of the state machine being represented. The flipflops FF1, FF2, FF3 and FF4, for example D-flipflops, have data inputs D₁, D₂, D₃ and D₄, and clock inputs C₁, C₂, C₃ and C₄. The majority logic arrangement 7 further comprises a combinational logic circuit 10 with inputs 11 and 12 coupled to the inputs 8 and 9 of the majority logic arrangement 7 and with outputs 13, 14, 15 and 16 coupled to the data inputs D₁, D₂, D₃ and D₄. The combinational logic circuit 10 has further inputs 17, 18, 19 and 20 coupled to the outputs Q₁, Q₂, Q₃ and Q₄ of the flipflops FF1, FF2, FF3 and FF4. The first or up-count input 8 supplies an up-count signal up formed from a logic-and of the shift register input 2 and the inverse of the output of the last shift register stage st6 by means of a first and-gate 21 and the second or down-count input 9 supplies a down-count signal dn formed from a logic-and of the inverse of the shift register input and the output of the last shift register stage st6 by means of a second and-gate 22. The up-count and down-count signals up and dn control the transition of an internal state to another internal state in the state machine which can be regarded as a controlled state counter of which the operation will be described in conjunction with figure 2. The majority logic arrangement comprises a further combinational logic circuit 23 for decoding internal states of the state machine and supplying a filtered digital signal at an output 24. To ensure that data is stable upon entry into the shift register 3, i.e. is stable during clock transitions, the arrangement 1 further comprises an input latch L with an input 25 for inputting the noisy digital data signal. The latch L comprises a clock input 26, which is clocked by the clocking means 5 and an output 27 coupled to the input 2 of the shift register. The combinational logic circuit 23 is a simple gate circuit which will be described in conjunction with figure 2.

Fig. 2 shows a state diagram sdg for the operation of a majority logic arrangement 7 in an arrangement 1 for estimating data according to the present invention. Shown are 10 internal states of the majority logic arrangement 7 or state machine, states s1, s2, s3, s4, s5, s6, s7, s8, s9 and s10. The states represent a count of the number of data of a first logic value in the shift register 3, e.g. the logic value "1", i.e. the "1"s are counted. For the rest the shift register 3 is filled with data of a second logic value, i.e. is filled with "0"s. The states s1, s2 and s3 represent 0, 1 and 2 "1"s is the shift register 3 respectively, and the states s8, s9 and s10 represent 4, 5 and 6 "1"s in the shift register 3 respectively. For a correct majority logic decision the state representing 3 "1"s is split-up in two states, states s4 and s7, and further states s5 and s6 are added to the states s3 and s8 adjacent to the states s4 and s7, the states s5 and s6 representing 2 and 4 "1"s respectively. By chosing proper transitions, controlled by the up-count signal up and down-count signal dn, such as shown in the state diagram sdg, it is ensured that always a proper majority decision is taken and in case of three "1"s and three "0"s the previous majority decision is maintained. Given the state diagram sdg, the state machine can be implemented in various ways. The design of the combinational circuit 10, having two input signals up and dn, and four inputs representing ten internal states s1 through s10, is straightforward, and can be carried out by applying a design method for finite state flipflop machines, e.g. with D-flipflops, such as described in the handbook "Logic Design Principles", E.J. McCluskey, Prentice-Hall, 1986, ISBN 0-13-539768-5, pages 333-345. The internal states are decoded by the combinational circuit 23, which decodes the states s1, s2, s3, s4 and s5 below the dashed line x as logic "0" at the output 24 and which decodes the states s6, s7, s8, s9 and s10 above the dashed line x as logic "1". The design of the combinational circuit 23, which can be a simple gate circuit, can be done with the help of Karnaugh diagrams. By applying programmable logic sequencers such as a registered PLA (Programmable Logic Array), available as standard catalog part and comprising D-flipflops, the entire finite-state machine can be realised with one integrated circuit. For programming such so-called EPLDs (Eraseable Programmable Logic Devices), given the state diagram of the state machine 7, various programs are commercially available, such as the SNAP program by Signetics. The arrangement 1 for estimating data can be realised by applying an Integrated Circuit type PLC42VA12 together with a 12-bit shift register and an edge-triggered input latch, if twelve samples of the noisy data are taken, a preferred number of samples.

Fig. 3 shows a paging receiver 30 comprising an arrangement 1 for estimating data according to the present invention. The receiver 30 comprises an rf-input 31 for receiving an rf-data-signal via an antenna 32, an rf-if-circuit 33 coupled with a demodulator 34 for demodulating the received rf-signal. After filtering of the data according to the present invention the filtered signal is further processed in the receiver in a known way. A front end of a paging receiver 30, comprising the rf-if-circuit 33 and the demodulator 34, is disclosed in the Laboratory report UAA2080T VHF/UHF Paging Receiver, Features and Applications, Philips Report Nr. ETT9 1003, 31.01.92, 95 pages.

## Claims

1. An arrangement (1) for estimating data from a noisy digital data signal, comprising a shift register (3) having a plurality of n stages (st1, st2, st3, st4, st5, st6), n being an integer, the shift register (3) having an input (2) and a clock input (4), means (5) for clocking the clock input (4) at a frequency greater or equal than n times the data rate of the noisy signal, and a majority logic arrangement (7) coupled to the shift register, the majority logic arrangement having an output (24) for outputting a digital output signal on the basis of a majority decision about digital data in the n stages (st1, st2, st3, st4, st5, st6), characterised in that the majority logic arrangement (7) is a state machine having a first and a second input (8, 9) coupled to the input (2) of a first (st1) and an output (Q₆) of a last shift register stage (st6), and having internal states (s1, s2, s3, s4, s5, s6, s7, s8, s9, s10) representing increasing numbers of data bits in the shift register (3) of a first logic value ("1"), a transition from an internal state to a state representing an increased number of data bits occurring on entry of an input datum into the shift register (3) of the first logic value ("1") and on leave of a datum of a second logic value ("0") out of the last stage (st6), and a transition from an internal state to a state representing a decreased number of data bits occurring on entry of an input datum into the shift register (3) of the second logic value ("0") and on leave of a datum of the first logic value ("1") out of the last stage (st6).

2. An arrangement (1) as claimed in claim 1, characterised in that the state machine (7) comprises an up-count input (8) for controlling the transition to the increased state, and a down-count input (9) for controlling the transition to the decreased state, the up-count input (8) being gated by a logic-and of the shift register input (2) and the inverse of the output of the last shift register stage (st6), and the down-count input (9) being gated by a logic-and of the inverse of the shift register input (2) and the output of the last shift register stage (st6).

3. An arrangement (1) as claimed in claims 1 or 2, characterised in that the number of stages n is even, and in that the state machine (7) comprises two internal states (s4, s7) representing the same number of data bits in the shift register (3) of the first ("1") and the second digital value ("0"), and two adjacent internal states (s5, s6) for allowing to maintain a correct transition from a previous majority decision.

4. An arrangement as claimed in claims 1, 2 or 3, characterised in that the shift register (3) is loaded with a predetermined bit pattern at power-on of the arrangement (1) and that an internal state of the state machine is set accordingly.

5. An arrangement as claimed in claims 1, 2, 3 or 4, characterised in that the arrangement (1) further comprises an input latch (L) coupled to the input (2) of the shift register (3) for inputting the noisy data into the shift register (3).

6. A receiver (30) comprising an rf-input (31) for receiving an rf-data-signal, a demodulator (34) for demodulating the rf-data-signal, and an arrangement (1) for estimating data from a demodulated rf-data-signal, the arrangement comprising a shift register (3) having a plurality of n stages (st1, st2, st3, st4, st5, st6), n being an integer, the shift register (3) having an input (2) and a clock input (4), means (5) for clocking the clock input (4) at a frequency greater or equal than n times the data rate of the noisy signal, and a majority logic arrangement (7) coupled to the shift register (3), the majority logic arrangement (7) having an output (24) for outputting a digital output signal on the basis of a majority decision about digital data in the n stages (st1, st2, st3, st4, st5, st6), characterised in that the majority logic arrangement (7) is a state machine having a first and a second input (8, 9) coupled to the input (2) of a first (st1) and an output (Q₆) of a last shift register stage (st6), and having internal states representing increasing numbers of data bits in the shift register (3) of a first logic value ("1"), a transition from an internal state to a state representing an increased number of data bits occurring on entry of an input datum into the shift register (3) of the first logic value ("1") and on leave of a datum of a second logic value ("0") out of the last stage (st6), and a transition from an internal state to a state representing a decreased number of data bits occurring on entry of an input datum into the shift register (3) of the second logic value ("0") and on leave of a datum of the first logic value ("1") out of the last stage (st6).
